# DEMANDE DE BREVET EUROPEEN

(11) **EP 2 359 681 A1**
(43) Date de publication de la demande: **24.08.2011**
(21) Numéro de dépôt: 11290087.3
(22) Date de dépôt: 15.02.2011
(51) Int. Cl.: A01G 31/02

(54) **Structure pour la culture végétale**

(30) Priorité: 15.02.2010 FR 1000630
(71) Demandeur: Keller, Sacha Alexis, 94200 Ivry sur Seine (FR)
(72) Inventeur: Keller, Sacha Alexis, 94200 Ivry sur Seine (FR)

(57) **Abrégé**

Une structure pour la culture végétale, caractérisée en ce qu'elle comprend une première (2) et une deuxième (3) paroi disposées l'une en face de l'autre et distantes l'une de l'autre de sorte à former entre elles un espace fermé, la première paroi (2) comprenant un volet mobile (7) entre une position ouverte donnant accès à l'espace fermé et une position fermée fermant l'accès à l'espace fermé, et en ce qu'elle comprend un plan de culture vertical (21) disposé dans l'espace fermé sur ladite deuxième paroi (3).

## Description

L'invention concerne une structure pour la culture végétale, notamment pour la culture de plantes aromatiques, de légumes ou de plantes ornementales telles que des fleurs.

L'habitat citadin actuel privé de surface de culture extérieure n'est pas adapté à cette culture végétale. Les besoins en lumière, en eau et en nutriment des végétaux ne permettent pas une culture intérieure dans des conditions adéquates. De plus dans un tel environnement l'espace est très limité et donc peu propice au développement d'une culture exigeante en surface.

Il existe donc un besoin grandissant pour une structure de culture végétale dans ce type d'environnement.

La présente invention vise donc à fournir une structure adaptée à la culture végétale intérieure dont l'encombrement au sol est limité tout en maximisant la surface d'exploitation.

A cet effet l'invention a pour objet une structure pour la culture végétale, caractérisée en ce qu'elle comprend une première et une deuxième paroi disposées l'une en face de l'autre et distantes l'une de l'autre de sorte à former entre elles un espace fermé, la première paroi comprenant un volet mobile entre une position ouverte donnant accès à l'espace fermé et une position fermée fermant l'accès à l'espace fermé, et en ce qu'elle comprend un plan de culture vertical disposé dans l'espace fermé sur ladite deuxième paroi. De préférence, le volet mobile est un panneau pivotant et/ou amovible.

Avantageusement, la structure pour la culture végétale selon l'invention permet, de par sa configuration fermée, de contrôler les paramètres essentiels à la culture tels que la lumière, la circulation de l'air et l'humidité. D'autre part, son plan de culture intérieur vertical permet de réduire considérablement son encombrement. Enfin l'ouverture mobile disposée face au plan de culture vertical permet un accès direct et aisé au plan de culture facilitant son installation et son entretien. En conséquence, la structure selon l'invention est parfaitement adapté à la culture en intérieure.

Selon un mode de réalisation particulier, la structure selon l'invention comprend un système d'irrigation s'étendant le long et au dessus de la deuxième paroi pour déplacer une solution nutritive à partir d'une partie inférieure de la dite structure vers une partie supérieure de ladite structure de sorte à irriguer le plan de culture vertical par gravité. De préférence, le système d'irrigation comprend un dispositif de pompage agencé pour déplacer la dite solution nutritive à partir de ladite partie inférieure de la structure vers ladite partie supérieure. Un bac de réserve pour la solution nutritive est également disposé dans la partie inférieure de ladite structure, le plan de culture étant disposé à l'aplomb dudit bac, et ledit bac étant ouvert dans sa partie supérieure pour recevoir la solution nutritive s'écoulant du plan de culture vertical par gravité.

Selon un autre mode de réalisation particulier, la structure selon l'invention comprend un système d'éclairage disposé sur une surface intérieure de la dite structure. En outre, la surface intérieure est recouverte au moins partiellement d'un matériau réfléchissant la lumière, et une surface extérieure recouverte au moins partiellement d'un matériau opaque à la lumière.

Selon encore un autre mode de réalisation particulier, la structure selon l'invention comprend les particularités suivantes :
- un système d'aération formant des ouvertures latérales qui constituent un passage entre l'extérieur et ledit espace fermé de ladite structure fermée;
- un conduit d'extraction disposé dans une partie supérieure de ladite structure fermée;
- des moyens de fixation à un mur, lesdits moyens de fixation étant disposés à l'extérieure de ladite structure et sur ladite deuxième paroi;
- le plan de culture comprend un substrat nutritif destiné à recevoir des racines de végétaux.

Selon encore un autre mode de réalisation particulier, la structure selon l'invention comprend un bac de réserve comprenant des organismes vivants aptes à fournir des substances nutritives pour la culture végétale.

Avantageusement, la surface de culture à la verticale auto-arrosée selon l'invention est hermétique aux odeurs et à la lumière, elle est ventilée et éclairée de manière optimale ce qui est parfaitement adapté pour la culture d'herbier et autres plantes aromatiques. Elle peut en outre constituer un véritable potager d'intérieur adapté à l'environnement citadin.

L'invention sera mieux comprise à la lueur de la description ci-dessous qui n'est donnée qu'à titre d'exemple.
La figure 1 illustre de manière schématique la structure pour la culture végétale selon l'invention dans une configuration fermée.
La figure 2 illustre de manière schématique la structure pour la culture végétale selon l'invention dans une configuration ouverte.

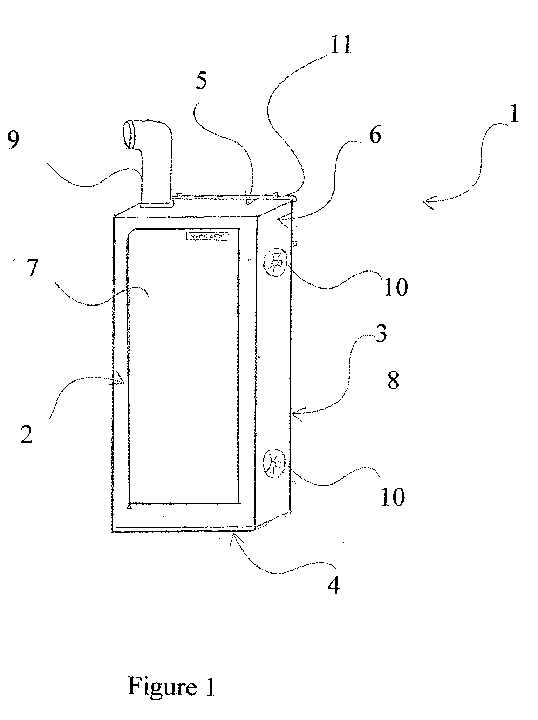

Dans l'exemple de réalisation de la figure 1, on montre la structure 1 pour la culture végétale selon l'invention se présentant sous une forme parallélépipédique. Il est entendu que l'invention ne se limite pas à ce type de forme particulière. En particulier, elle pourrait revêtir toute forme esthétique se mariant harmonieusement avec l'habitat intérieur.

La structure 1 selon l'invention est fermée et comprend principalement une première paroi 2 et une deuxième paroi 3 sensiblement parallèles. La deuxième paroi 3 est distante de la première paroi 2 et agencée de manière opposée de sorte à définir un espace fermé. La structure 1 comprend également une partie inférieure 4, une partie supérieure 5 respectivement disposées au-dessus et en dessous des faces 2 et 3, et deux parois latérales 6 disposées sur les cotés des faces 2 et 3, le tout définissant l'espace fermé propice à la culture végétale de la structure 1.

En outre, la structure fermée 1 comprend un volet mobile 7, un système d'aération 8 et un conduit d'extraction 9.

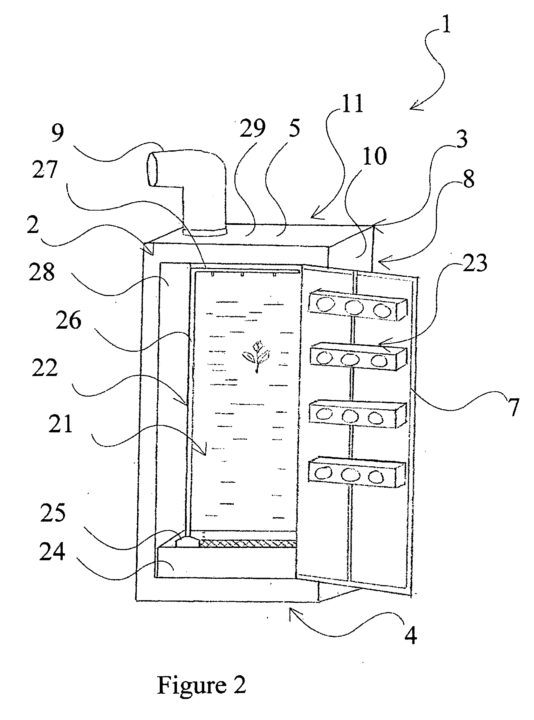

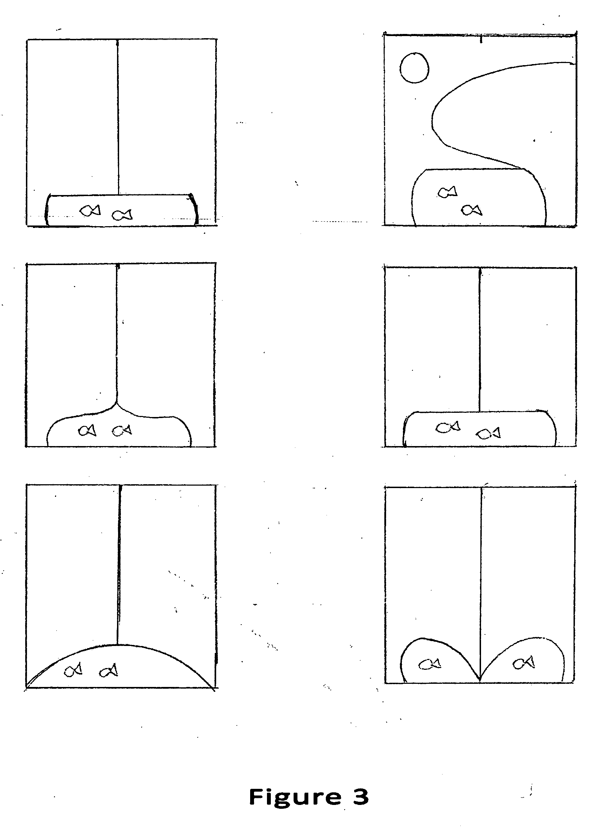

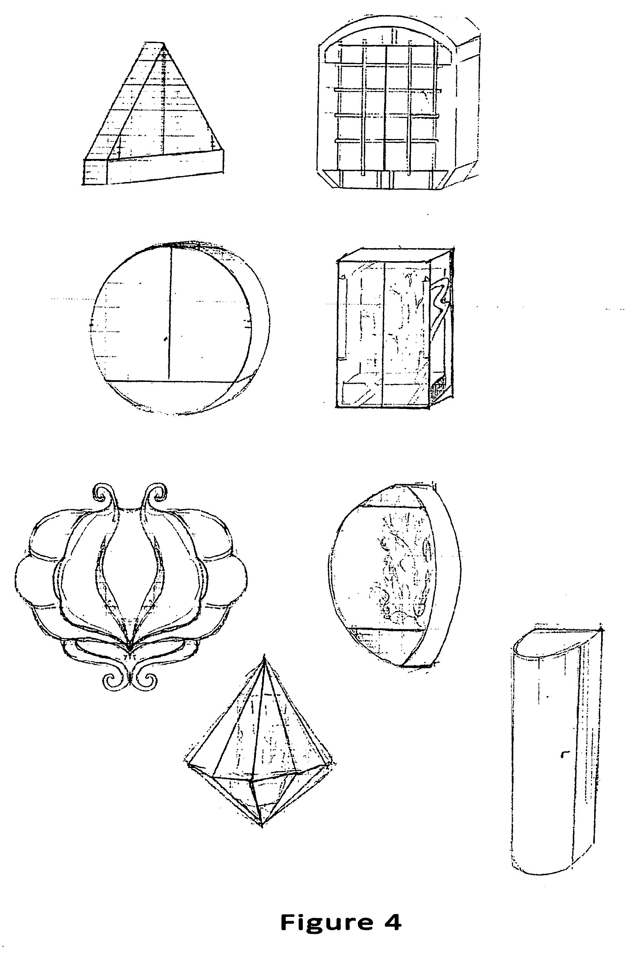

Le volet mobile 7 est disposée en façade sur la première paroi 2 de la structure fermée 1. Ce volet 7 est mobile entre position fermée de la structure 1 illustrée sur la figure 1 et une position ouverte comme décrit ci-après en référence à la figure 2. En position fermée le volet 7 est sensiblement parallèle à la première paroi 2. En position ouverte, le volet 7 pivote et se décale de la première paroi. Il constitue ainsi l'accès principal entre l'espace intérieur de la structure fermée 1 et l'extérieur. Il peut se présenté sous une forme souple, par exemple une toile, ou rigide par exemple un panneau pivotant selon un axe vertical. Dans un autre mode de réalisation elle peut se présenter sous la forme d'un panneau rigide amovible.

Le système d'aération 8 est formé par des ouvertures 10 disposées de préférence le long des parois latérales 6 de la structure fermée 1. Les ouvertures 10 constituent un passage réduit entre l'extérieur et la partie intérieure de ladite structure fermée 1 pour l'intraction de l'air. Par exemple des hélices rotatives équipent les ouvertures 10 de manière à réguler la quantité d'oxygène introduite dans la structure fermée 1. De préférence, les hélices sont entraînées en rotation de manière passive, c'est-à-dire par l'appel d'air produit par un dispositif d'extraction d'air motorisé situé sur le dessous de la structure 1.

Le conduit d'extraction 9 est disposé dans la partie supérieure 5 de la structure fermée 1 de sorte à optimiser l'extraction par le haut de l'air chaud contenu dans la partie intérieure de la structure fermée 1 vers l'extérieur. Par exemple le conduit d'extraction peut être une gaine souple de 10 cm de diamètre. Alternativement, l'extraction de l'air peut être forcée et contrôlée par un dispositif motorisé.

Avantageusement, les actions du système d'aération 8 et du conduit d'extraction 9 se combinent pour assurer une circulation optimale de l'air dans l'espace fermé de la structure 1.

Par ailleurs, la structure fermée 1 pour la culture végétale comprend des moyens de fixation 11 de la structure 1 à un mur. Les moyens de fixation 11 sont disposés à l'extérieure de la structure fermée 1 et sur la deuxième paroi 3 opposée à la façade 2, c'est-à-dire à l'arrière de la structure 1. Ces moyens de fixation sont par exemple constitués d'un système de tiges/crochets pour fixer la structure 1 au mur de l'habitat de manière simple au moyen de vis et de chevilles.

Dans l'exemple de réalisation illustré sur la figure 1, la structure pour la culture végétale présente par exemple les dimensions extérieure suivantes : 80cm de haut 45 de large et 25 de profondeur. Le volet mobile est par exemple haut de 72 cm et large de 35 cm. Les ouvertures 10 du dispositif d'aération 8 sont par exemple de forme circulaire ou rectangulaire. Dans ce dernier cas, elles présentent par exemple une largeur de 15 cm pour une hauteur de 8 cm. Une telle structure offre une surface de culture d'au moins 1,60 m².

Sur la figure 2, on a représenté la structure selon l'invention dans une configuration ouverte, c'est-à-dire avec le volet 7 décalé par rapport à la première paroi 2 offrant ainsi un accès à l'espace fermé intérieur de la structure 1.

L'espace fermé de la structure 1 comprend principalement un plan de culture 21, un système d'irrigation 22 et un système d'éclairage 23.

Comme cela est illustré sur la figure 2, le plan de culture vertical 21 est disposé dans le fond de la structure fermée 1, c'est-à-dire dans l'espace fermé sur la deuxième paroi 3. Il a été mesuré expérimentalement qu'une distance minium d'environ 20 cm est nécessaire entre le plan de culture 21 et la première paroi pour que l'espace fermé présente un volume d'air suffisant pour la croissance végétale. Le plan de culture 21 ou nappe de culture comprend un substrat nutritif recouvert d'une enveloppe de maintien et dans lequel des ouvertures ou des poches sont formées de poche pour recevoir les racines de végétaux. Les végétaux ainsi disposés s'enracinent et poussent en quasi aéroponie. La nappe de culture est constituée d'un substrat à base de noix de coco et d'un feutre, par exemple un feutre géotextile. Alternativement, le substrat nutritif est maintenu par des agrafes, ou une grille ou tout autre moyen approprié.

Le système d'irrigation 22 se compose d'un bac de réserve 24, d'une pompe ou dispositif de pompage 25, d'un conduit de circulation 26 et un dispositif de goute à goute 27. Cet ensemble étant spécialement agencé pour déplacer une solution nutritive à partir de la partie inférieure 4 de la dite structure vers la partie supérieure 5 et ainsi irriguer le plan de culture verticale 21 par le haut et par gravité.

Le bac de réserve 24 est disposé dans l'espace fermé de la structure et sur la partie inférieure 4 à l'aplomb du plan de culture 21. Avantageusement cette disposition du bac 24 permet la récupération des eaux ayant circuler dans la nappe de culture 21. Le bac de réserve 24 est alimenté avec une solution nutritive constituée d'eau et de nutriments. Les nutriments se composent par exemple d'engrais hydroponique.

Le bac de réserve 24 est connecté à un conduit de circulation 26 via un dispositif de pompage 25. Le dispositif de pompage est agencé pour déplacer la solution nutritive contenue dans le bac 24 vers le conduit de circulation 26.

Le conduit de circulation 26 s'étend verticalement dans l'espace fermée sur la deuxième paroi 3 et le long de la nappe de culture pour déboucher sur le dispositif de goutte à goutte 27 disposé dans la partie supérieure 5.

Le dispositif de goutte à goutte 27 est agencé pour distribuée la solution nutritive de manière régulière et contrôlée dans la nappe de culture 21.

La solution nutritive circule ainsi en boucle fermée dans toute la nappe 21 pour alimenter en eau et en nutriments les végétaux en culture. La solution nutritive en excédent est ensuite reçue dans le bac de réserve 24 pour subir un nouveau cycle régulé.

Dans l'exemple illustré sur la figure 2, le système d'éclairage 23 est disposé sur le volet mobile 7 vers l'intérieur de la structure fermée 1. Il est par exemple constitué de néons et/ou de spots lumineux à basse consommation d'énergie qui chauffent peu et offrent un ratio de lumens suffisant pour la croissance des végétaux. Le système d'éclairage 23 peut restituer jusqu'à 600 watts de lumière pour une consommation de 105 watts. Alternativement et sans s'écarter de l'invention le système d'éclairage 23 peut être disposé dans l'espace fermé de la structure 1 de part et d'autre de la nappe de culture 21.

Selon l'invention, il est également prévu que la surface intérieure 28 de la structure fermée 1 soit recouverte au moins partiellement d'un matériau réfléchissant la lumière, par exemple: connu sous le nom de « Mylar ®» , et que la surface extérieure 29 soit recouverte au moins partiellement d'un matériau opaque à la lumière, par exemple du type : bâche plastifiée.Les dispositifs de pompage 25 et d'éclairage 23 sont de préférence contrôlés à l'aide d'un minuteur cyclique dont le temps de mise en connexion/déconnexion est paramétré en fonction du type de culture.

Dans un mode de réalisation particulier, le bac de réserve 24 contenant l'eau, contient également des organismes vivants assurant l'apport en substances nutritives ce qui permet d'éviter l'utilisation d'engrais chimiques. Les animaux et organismes vivants sont par exemple : des écrevisses ou autres poissons, des axolotes, des amphibiens, des escargot invertébrés... Un distributeur de nourriture, par exemple des granules issus de l'agriculture biologique, peut être prévu pour nourrir les animaux de manière automatique. Les déjections des animaux se mélangent à l'eau dans le bac de réserve et sont distribuées vers les végétaux au moyen du système d'irrigation 22. Le substrat de la nappe de culture 21 est ainsi fertilisé. Selon cette configuration aucun additif chimique n'est utilisé, la structure 1 pour la culture végétale est totalement écologique.

La structure pour la culture végétale 1 selon l'invention est prévue dans une version ergonomique et facile à monter. Dans cette version la structure 1 se compose d'une armature métallique, de préférence tubulaire, définissant sa forme générale. Cette armature est recouverte d'une bâche plastifiée épaisse et résistante, hydrofuge qui peut être déclinée en plusieurs matières et textures du type vinyl, jute, chanvre ou laqué ... Cette version est fermée par des fermetures connues sous le nom de « Fermetures Eclaires® » .

Une version plus luxueuse est également prévue. Selon cette version la forme générale de la structure 1 est réalisée en matériaux nobles, par exemple des bois tropicaux, du verre, de l'aluminium...

Enfin la structure fermée 1 pour la culture végétale est économe en eau et en énergie. Elle offre une ergonomie parfaitement adaptée à la culture en intérieur et un compromis idéal entre économie d'énergie et encombrement spatial.

### Légende :

- 1.: Structure fermée
- 2.: 1er face
- 3.: 2em face
- 4.: Partie inférieur
- 5.: Partie supérieur
- 6.: Parties latérales
- 7.: Volet
- 8.: Système aération
- 9.: Conduit d'extraction et extracteur
- 10.: Ouvertures
- 11.: Moyens de fixation
- 12.:
- 13.:
- 14.:
- 15.:
- 16.:
- 17.:
- 18.:
- 19.:
- 20.:
- 21.: Plan de culture
- 22.: Système d'irrigation
- 23.: système d'éclairage
- 24.: Bac réserve
- 25.: Pompe
- 26.: Conduit circulation
- 27.: Dispositif goute à goute
- 28.: Mylar
- 29.: Bâche

## Revendications

1. Structure pour la culture végétale, **caractérisée en ce qu'**elle comprend une première (2) et une deuxième (3) paroi disposées l'une en face de l'autre et distantes l'une de l'autre de sorte à former entre elles un espace fermé, la première paroi (2) comprenant un volet mobile (7) entre une position ouverte donnant accès à l'espace fermé et une position fermée fermant l'accès à l'espace fermé, et **en ce qu'**elle comprend un plan de culture vertical (21) disposé dans l'espace fermé sur ladite deuxième paroi (3).

2. Structure selon la revendication 1, **caractérisée en ce qu'**elle comprend un système d'irrigation (22) s'étendant le long et au dessus de la deuxième paroi (3) pour déplacer une solution nutritive à partir d'une partie inférieure (4) de la dite structure vers une partie supérieure (5) de ladite structure de sorte à irriguer le plan de culture vertical (21) par gravité.

3. Structure selon la revendication 2, dans laquelle le système d'irrigation (22) comprend un dispositif de pompage (25) agencé pour déplacer la dite solution nutritive à partir de ladite partie inférieure (4) de la structure vers ladite partie supérieure (5).

4. Structure selon l'une des revendications 2 ou 3, comprenant un bac de réserve (24) pour la solution nutritive disposé dans la partie inférieure (4) de ladite structure, le plan de culture (21) étant disposé à l'aplomb dudit bac, et ledit bac étant ouvert dans sa partie supérieure pour recevoir la solution nutritive s'écoulant du plan de culture vertical (21) par gravité.

5. Structure selon l'une des revendications précédentes, comprenant un système d'éclairage (23) disposé sur une surface intérieure de la dite structure.

6. Structure selon la revendication 5, caractérisée en ce quelle comprend une surface intérieure (28) recouverte au moins partiellement d'un matériau réfléchissant la lumière, et une surface extérieure (29) recouverte au moins partiellement d'un matériau opaque à la lumière.

7. Structure selon l'une des revendications précédentes, comprenant un système d'aération (8) formant des ouvertures latérales qui constituent un passage entre l'extérieur et ledit espace fermé de ladite structure.

8. Structure selon l'une des revendications précédentes, comprenant au moins un conduit d'extraction (9) disposé dans une partie supérieure de ladite structure fermée.

9. Structure selon l'une des revendications précédentes, comprenant des moyens de fixation (11) à un mur, lesdits moyens de fixation étant disposés à l'extérieur de ladite structure et sur ladite deuxième paroi.

10. Structure selon l'une des revendications précédentes, dans laquelle ledit volet mobile (7) est un panneau pivotant et/ou amovible.

11. Structure selon l'une des revendications précédentes, dans laquelle le plan de culture comprend un substrat nutritif destiné à recevoir des racines de végétaux.

12. Structure selon l'une des revendications précédentes, **caractérisée en ce qu'**elle comprend un bac de réserve comprenant des organismes vivants aptes à fournir des substances nutritives pour la culture végétale.
